# EUROPEAN PATENT SPECIFICATION

(11) **EP 3 796 756 B1**
(45) Date of publication and mention of the grant of the patent: **10.01.2024**
(21) Application number: 20168309.1
(22) Date of filing: 06.04.2020
(51) Int. Cl.: H05B 6/12

(54) **ELECTROMAGNETIC HEATING DEVICE AND COOKING APPLIANCE**
ELEKTROMAGNETISCHE HEIZVORRICHTUNG UND GARGERÄT
DISPOSITIF DE CHAUFFAGE ÉLECTROMAGNÉTIQUE ET APPAREIL DE CUISSON

(30) Priority: 23.09.2019 CN 201921589453 U; 25.10.2019 CN 201921815716 U
(43) Date of publication of application: 24.03.2021
(73) Proprietor: Foshan Shunde Midea Electrical Heating Appliances Manufacturing Co., Ltd., Foshan Guangdong 528311 (CN)
(72) Inventor: WU, Jinhua, Beijiao, Guangdong 528311 (CN); FANG, Jichang, Beijiao, Guangdong 528311 (CN); ZHANG, Yifei, Beijiao, Guangdong 528311 (CN); GUO, Xingjia, Beijiao, Guangdong 528311 (CN)
(74) Representative: RGTH

(56) References cited:
- WO-A1-2018/106013
- CN-U- 207 638 927
- JP-A- 2009 016 251
- JP-A- 2013 054 951

## Description

### TECHNICAL FIELD

The present disclosure relates to the technical field of cooking appliances, in particular to an electromagnetic heating device and a cooking appliance.

### BACKGROUND

In household electrical appliances, the heating appliance is typically circular, and magnetic field heating coil widely used is almost circular. Because the heating coil is wound in circle, the cooking appliance typically has a circular heating area. However, due to eddy-current concentration of the magnetic field on the appliance, the heating area cannot cover the projection area of the appliance corresponding to the coil, and the heating area is smaller than the effective area of the coil surface. This may result in a poor cooking experience, heating over-concentration and other problems.

CN 207 638 927 U (ZHEJIANG SHAOXING SUPOR DOMESTIC ELECTRICAL APPLIANCE CO LTD) 20 July 2018 (2018-07-20) describes an electromagnetic heating device comprising a coil disk.

### SUMMARY

The present disclosure is to provide an electromagnetic heating device and a cooking appliance, aiming at improving the insufficient effective heating area and heating over-concentration in the related technology.

In order to achieve the above object, the present disclosure provides an electromagnetic heating device, which includes:
a coil disk; and,
electromagnetic coils arranged on the coil disk, wherein the electromagnetic coils comprise first electromagnetic coils distributed and spaced apart on the coil disk;
wherein at least four first electromagnetic coils are provided;
a second electromagnetic coil positioned on said coil disk (1) at an area of space space between the first electromagnetic coils; and,
a third electromagnetic coil surrounding the at least four first electromagnetic coils and
in some of the embodiments, an outer diameter of the second electromagnetic coil is smaller than an outer diameter of one of the first electromagnetic coils.

According to the present invention, the first electromagnetic coils are arranged in rows and columns.

According to the present invention, the second electromagnetic coil is arranged between the first electromagnetic coils of two adjacent columns and two adjacent rows.

In some of the embodiments, the electromagnetic coils include the second electromagnetic coil and the third electromagnetic coil, and the third electromagnetic coil and the second electromagnetic coil are concentric.

In some of the embodiments, the third electromagnetic coil includes a convex portion protruding inward, and the convex portion is extending into an outer part of a space between two adjacent first electromagnetic coils.

In some of the embodiments, the third electromagnetic coil surrounds the first electromagnetic coils.

In some of the embodiments, the electromagnetic coil includes two or more third electromagnetic coils.

In some of the embodiments, the third electromagnetic coils are arranged in an inner circle and in an outer circle, forming an annular area between two adjacent third electromagnetic coils, and the first electromagnetic coils are arranged in the annular area, and at least four first electromagnetic coils are surrounded by the third electromagnetic coil located in an innermost circle.

In some of the embodiments, the third electromagnetic coil is arranged in square; or,
the third electromagnetic coil is arranged in square with an arc-like transition at corner; or,
the third electromagnetic coil is arranged in circle.

In some of the embodiments, the third electromagnetic coil and the second electromagnetic coil are concentric.

In some of the embodiments, winding directions of the electromagnetic coils are the same, so as to allow the electromagnetic coils to generate magnetic fields in a same direction.

In some of the embodiments, the electromagnetic coils are connected in series.

In some of the embodiments, the electromagnetic coils are divided into at least two independently controlled electromagnetic coil groups.

In some of the embodiments, the electromagnetic coils further include the second electromagnetic coil and the third electromagnetic coil;

the first electromagnetic coils are connected in series to form a first electromagnetic coil group, and the second electromagnetic coil and the third electromagnetic coil are connected in series to form a second electromagnetic coil group.

In some of the embodiments, a cooking appliance comprises the electromagnetic heating device that includes a cooking base provided with a working surface for placing and heating a pot;
a distance between an upper end of the electromagnetic coils and the working surface is d, and 5 mm ≤ d ≤ 8 mm.

In some of the embodiments, the coil disk is concave; or,
the coil disk is flat.

The present disclosure further provides a cooking appliance, which includes an electromagnetic heating device including:
a coil disk; and,
electromagnetic coils arranged on the coil disk, wherein the electromagnetic coils comprise first electromagnetic coils distributed and spaced on the coil disk; wherein at least four first electromagnetic coils are provided
a second electromagnetic coil at an interval between the first electromagnetic coils; and/or,
a third electromagnetic coil surrounding the at least four first electromagnetic coils.

In the technical solution of the present disclosure, first electromagnetic coils are distributed and spaced on the coil disk to correspondingly form magnetic field centers. Such arrangement may overcome the problem of heating concentration in the related art. And compared with a large heating area in the related art, the first electromagnetic coils are distributed and spaced to form heating small centers taking each as a center, resulting in wider heating area and thus a larger effective heating area to improve the insufficient effective heating area in the related art. Further, a second electromagnetic coil and/or a third electromagnetic coil are arranged. The second electromagnetic coil is arranged in a spaced area between the first electromagnetic coils, and the third electromagnetic coil is arranged around the at least four first electromagnetic coils. The second electromagnetic coil can enhance the magnetic field strength of the spaced area between the first electromagnetic coils, and the third electromagnetic coil can enhance the magnetic field strength of the first electromagnetic coil wounded around its outside. The coupling coefficient between the magnetic field generated by the electromagnetic coils and the cooking appliance is increased through the second electromagnetic coil and/or the third electromagnetic coil to improve heating power.

### BRIEF DESCRIPTION OF THE DRAWINGS

In order to explain the embodiment of the present application or the technical solution of the prior art more clearly, the following will briefly introduce the drawings necessary in the description of the embodiments or the prior art. Obviously, the drawings in the following description are only some embodiments of the present application. For those ordinary skill in the art, other drawings can be obtained according to the structure shown in these drawings without any creative effort.
Fig. 1 is a schematic plan view of the electromagnetic heating device not according to the present disclosure when only the first electromagnetic coil is provided;
Fig. 2 is a schematic diagram of the thermal field distribution when the electromagnetic heating device of Fig. 1 is heated;
Fig. 3 is a schematic plan view of the cooking appliance not according to the invention, in which the electromagnetic heating device in this figure is the electromagnetic heating device of the first embodiment;
Fig. 4 is a schematic plan view of the electromagnetic heating device in Fig. 3;
Fig. 5 is a schematic plan view of the electromagnetic heating device in Fig. 3;
Fig. 6 is a schematic plan view of the electromagnetic heating device in Fig. 3 according to the invention;
Fig. 7 is a schematic diagram of the thermal field distribution when the electromagnetic heating device of Fig. 6 is heated;
Fig. 8 is a schematic plan view of the electromagnetic heating device in Fig. 3 according to a fourth embodiment of the present disclosure;
Fig. 9 is a schematic plan view of the electromagnetic heating device in Fig. 3 according to a fifth embodiment of the present disclosure.

### Description of reference numerals:

| Reference Numeral | Name | Reference Numeral | Name |
|---|---|---|---|
| 100 | Cooking appliance | 2b | Second electromagnetic coil |
| 101 | Electromagnetic heating device | 2c | Third electromagnetic coil |
| 1 | Coil disk | 21c | Convex portion |
| 2 | Electromagnetic coil | 102 | Pot |
| 2a | First electromagnetic coil | | |

### DETAILED DESCRIPTION OF THE EMBODIMENTS

It should be appreciated that if directional indications (such as up, down, left, right, front, back, etc.) are involved in the embodiments of the present application, the directional indications are only used to explain the relative positional relationship and movement between the components in a certain posture (as shown in the drawings), and if the specific posture changes, the directional indications will change accordingly.

In addition, if there are descriptions of "first" and "second" in the embodiments of this disclosure, the descriptions of "first" and "second" are used for descriptive purposes only and cannot be understood as indicating or implying their relative importance or implicitly indicating the number of indicated technical features. Thus, features defining "first" and "second" may explicitly or implicitly include at least one of the features. In addition, the meaning of "and/or" appearing in the full text is to include three parallel schemes, taking " a and/or b" as some embodiments, including solution of a or b, or solution that both a and b satisfy at the same time. In addition, the technical solutions between the various embodiments may be combined with each other, but must be based on what one of ordinary skill in the art can achieve. When the combination of technical solutions is contradictory or impossible to achieve, it should be considered that the combination of such technical solutions does not exist and is not within the protection scope required by the present disclosure.

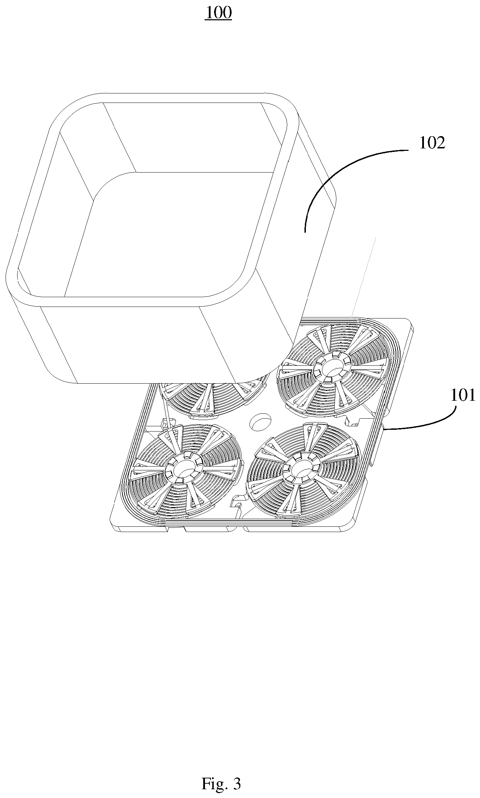

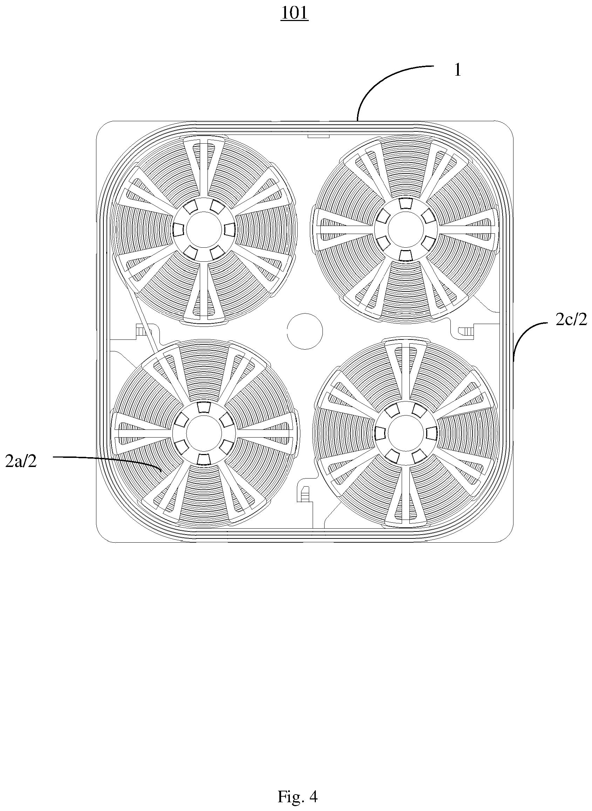

The present disclosure provides a cooking appliance, as shown in Fig. 3. The cooking appliance 100 includes an electromagnetic heating device 101 and a pot 102. The cooking appliance 100 can be but not limited to one of an induction cooker, an electric cooker, an electric pressure cooker and a cooking machine. Figs. 4 to 9 are the electromagnetic heating device according to embodiments provided by the present disclosure. The electromagnetic heating device provided by the present disclosure will be described in detail below with reference to the attached drawings.

Referring to Fig. 4, the present disclosure provides an electromagnetic heating device 101, which includes a coil disk 1 and electromagnetic coils 2.

The shape or structure of the coil disk 1 should not be limited. For example, the coil disk 1 may be arranged in a concave shape, as shown in Figs. 4 to 9. The coil disk 1 is generally suitable for induction cookers.

Referring to Fig. 4 continuously, the electromagnetic coils 2 are arranged on the coil disk 1. The electromagnetic coils 2 include multiple first electromagnetic coils 2a which are distributed and spaced apart on the coil disk 1 to correspondingly form multiple independent winding areas and further correspondingly form multiple magnetic field centers.

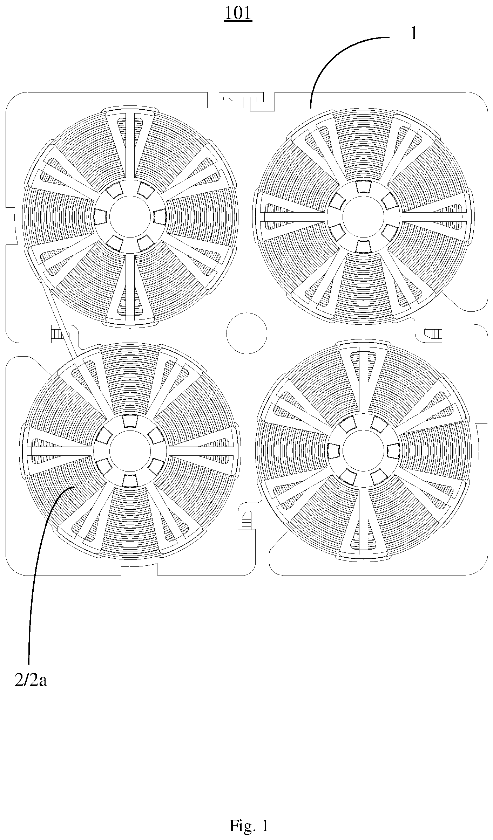

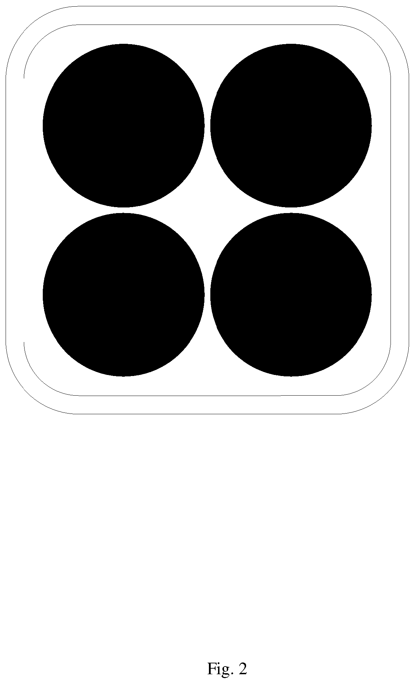

Multiple heating areas will be formed by the first electromagnetic coils 2a, improving the heating over-concentration and insufficient effective heating area in the related art. However, as can be seen from Figs. 1 and 2, areas (blank portions) are formed in the areas and peripheries between the first electromagnetic coils 2a where the magnetic field is poor. As such, poor heating areas are correspondingly formed. Further, compared to a large electromagnetic coil with a same winding range, the first electromagnetic coils 2a in such arrangement would decrease the coupling coefficient between the magnetic field generated by the first electromagnetic coils 2a and the cooker 102, resulting in a unsatisfactory heating power. For above, in the present disclosure, as shown in Figs. 4 to 9, the electromagnetic coils 2 further include a second electromagnetic coil 2b and/or a third electromagnetic coil 2c. The second electromagnetic coil 2b is disposed in a spaced area between the first electromagnetic coils 2a, and the third electromagnetic coil 2c surrounds at least two of the first electromagnetic coils 2a.

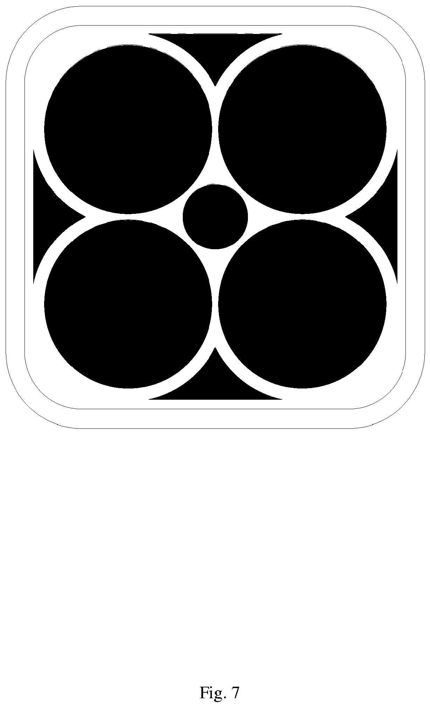

In the technical solution of the present disclosure, a first electromagnetic coils 2a are distributed and spaced on the coil disk 1 to correspondingly form multiple magnetic field centers. Multiple heating centers are thus formed during heating process (as shown in Fig. 2, four black areas are four heating centers). The problem can be solved of heating over-concentration in the related art. The first electromagnetic coils 2a are distributed and spaced to form multiple heating centers with various respective centers. The heating area is larger compared to the related art. According to the technical solution of the present disclosure, multiple heating centers are distributed in a wider area, and the effective heating area can be increased to improve an insufficient effective heating area in the related art. Furthermore, as can be seen from Fig. 7, the second electromagnetic coil 2b and/or the third electromagnetic coil 2c are arranged. The second electromagnetic coil 2b can enhance the magnetic field strength of the spaced area between the first electromagnetic coils 2a. The third electromagnetic coil 2c can enhance the magnetic field strength of at least two of the first electromagnetic coils 2a on their outer surroundings. The coupling coefficient between the magnetic field generated by the electromagnetic coils 2 and the pot can be increased to improve the heating power.

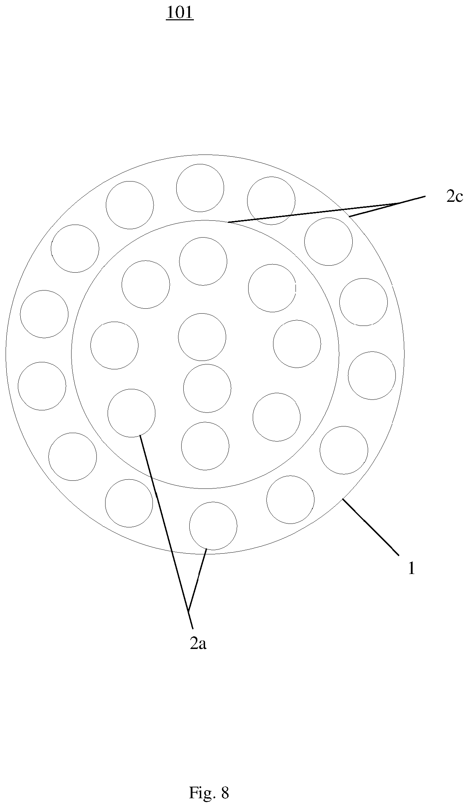

The first electromagnetic coils 2a are distributed on the coil disk 1, and the specific distribution is not limited herein. Refer to Figs. 4 to 7, in these embodiments, the first electromagnetic coils 2a are distributed in rows and columns. In some other embodiments, as shown in Fig. 8, the first electromagnetic coils 2a may be distributed circumferentially in annular shape. Obviously, the distribution of the first electromagnetic coils 2a depends on the requirements of the effective heating area. For example, if the effective heating area is circular, it is preferable that the first electromagnetic coils 2a are distributed annularly. While with respect to the effective heating area which is square, etc. correspondingly, the first electromagnetic coils 2a are arranged in a square. A specific example is provided in a matrix arrangement, specifically in a matrix arrangement of 2 rows * 2 columns as shown in Figs. 4 to 7.

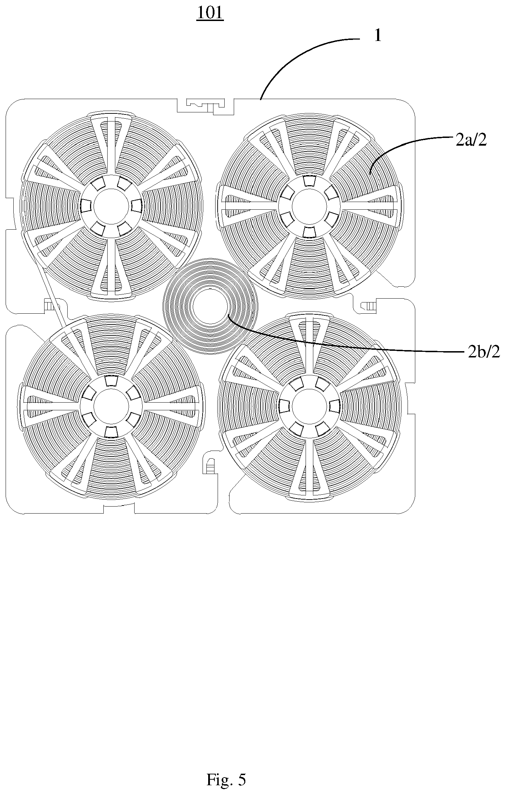

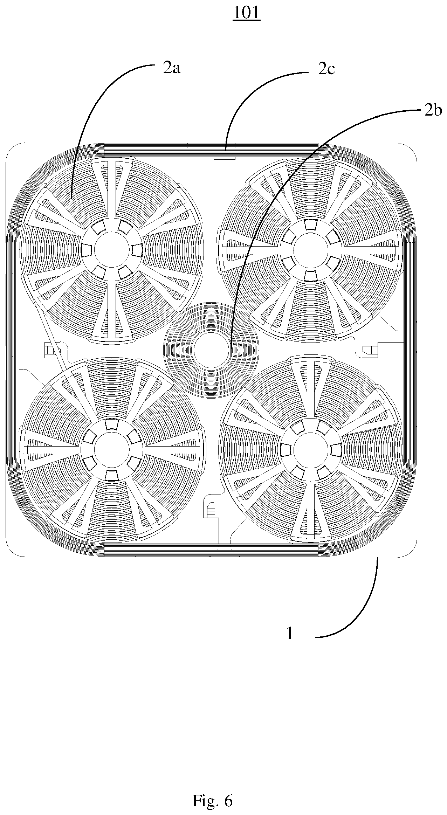

For above, it can be seen that the electromagnetic coils 2 further include the second electromagnetic coil 2b and/or the third electromagnetic coil 2c. Correspondingly, there are three specific scenarios. As shown in Figs. 3 and 4, the electromagnetic coils 2 include the first electromagnetic coil 2a and the third electromagnetic coil 2c; as shown in Fig. 5, the electromagnetic coils 2 include the first electromagnetic coil 2a and the second electromagnetic coil 2b; and as shown in Fig. 6, the electromagnetic coils 2 include the first electromagnetic coil 2a, the second electromagnetic coil 2b, and the third electromagnetic coil 2c. All these variations would be described below with reference to the attached drawings respectively.

In the present disclosure, multiple heating areas will be formed by the first electromagnetic coils 2a and problems are solved regarding heating over-concentration and insufficient effective heating area in the related art. Obviously, a poor magnetic field area will be formed in the area between the first electromagnetic coils 2a. Correspondingly, a poor heating area will be formed. And compared to a large electromagnetic coil in the same winding range, the arrangement of the first electromagnetic coils 2a decreases the coupling coefficient between the magnetic field generated by the first electromagnetic coils 2a and the pot 102, resulting in unsatisfactory power. As such, in some embodiment of the present invention, as shown in Fig. 5, the electromagnetic coils 2 further include the second electromagnetic coils 2b, which are distributed in the spaced area between the first electromagnetic coils 2a. The second electromagnetic coil 2b can compensate the magnetic field in the spaced area to further improve the heating uniformity. Furthermore, the coupling coefficient between the magnetic field generated by the electromagnetic coils 2 and the pot 102 can be increased to improve the heating power.

Since the second electromagnetic coil 2b is arranged in the spaced area of the first electromagnetic coils 2a, the first electromagnetic coils 2a are distributed at regular space intervals, and the spaced area formed between the first electromagnetic coils 2a is relatively small. Therefore, the outer diameter of the second electromagnetic coil 2b is usually smaller than the outer diameter of the first electromagnetic coil 2a, so that the arrangement of the second electromagnetic coil 2b in the space area of the first electromagnetic coils 2a is facilitated. It should be appreciated that the electromagnetic coil 2 is not limited to being circular, that is, the first electromagnetic coil 2a and the second electromagnetic coil 2b are not limited to being circular. As such, the outer diameters of the second electromagnetic coil 2b and the first electromagnetic coil 2a, if the second electromagnetic coil 2b and the first electromagnetic coil 2a are circular, are the corresponding diameter; and if they are non-circular, the outer diameter is considered as the diameter of the circumscribed circle of the first electromagnetic coils 2a or the second electromagnetic coil 2b.

Further, as shown in Fig. 5, the first electromagnetic coils 2a are distributed in rows and columns, and the second electromagnetic coils 2b are disposed between the first electromagnetic coils 2a of two adjacent columns and two adjacent rows. Obviously, the arrangement is not limited to above description. If the first electromagnetic coils 2a are annularly distributed, the second electromagnetic coils 2b may be distributed inside the annular area defined by the first electromagnetic coils 2a, as shown in Fig. 8.

In the present disclosure, multiple heating areas will be formed by the first electromagnetic coils 2a and problems are solved regarding heating over-concentration and insufficient effective heating area in the related art. Obviously, a poor magnetic field area will be formed in the exterior area of the first electromagnetic coils 2a. Correspondingly, a poor heating area will be formed. And compared to a large electromagnetic coil in the same winding range, the arrangement of the first electromagnetic coils 2a decreases the coupling coefficient between the magnetic field generated by the first electromagnetic coils 2a and the pot 102, resulting in unsatisfactory power. As such, in some embodiment of the present invention, as shown in Fig. 5, the electromagnetic coils 2 further include the third electromagnetic coils 2c, configured to improve the magnetic field distributed at the exterior surroundings of at least two of the first electromagnetic coils 2a. And the heating uniformity is improved. Furthermore, the coupling coefficient between the magnetic field generated by the electromagnetic coils 2 and the pot 102 can be increased to improve the heating power.

The third electromagnetic coil 2c is sourrounding at least two of the first electromagnetic coils 2a, and the number of the third electromagnetic coils 2c and the number of the first electromagnetic coils 2a are not limited.

For example, as shown in Fig. 4, one third electromagnetic coil 2c is provided sourrounding all of the first electromagnetic coils 2a.

Alternatively, as shown in Fig. 8, two or more of the third electromagnetic coils 2c may be provided. As such, the first electromagnetic coils 2a in different areas can be respectively wound around, and the arrangement density of the electromagnetic coils 2 can be further improved to increase the heating power. Specifically, as shown in Fig. 8, multiple third electromagnetic coils 2c are arranged in inner and outer rings to form an annular area between two adjacent third electromagnetic coils 2c. The first electromagnetic coils 2a is provided in the annular area, and at least two first electromagnetic coils 2a are arranged in the innermost third electromagnetic coil 2c.

The shape of the third electromagnetic coil 2c is not limited, which may depend on the actual distribution area of the first electromagnetic coils 2a, the actual heating area, or the actual heating effect. For example, the third electromagnetic coil 2c may be in square, or in circle; or, as shown in Fig. 3, the third coil 2c may be arranged in square with an arc-like transition at corner.

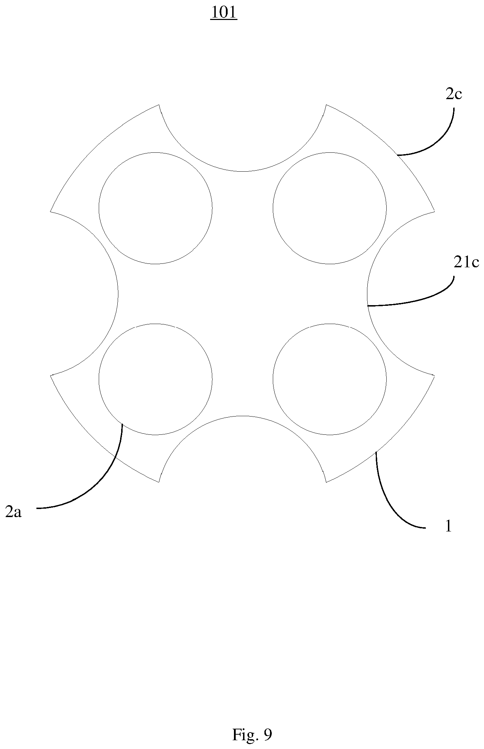

Moreover, in some embodiments, considering the actual magnetic field distribution, the third electromagnetic coil 2c may be specially arranged. As shown in Fig. 9, the third electromagnetic coil 2c is formed with convex portions 21c protruding inward, and the convex portions 21c is extended into the outer part of the space between two adjacent first electromagnetic coils 2a, compensating the shortage of the magnetic field in the outer gap and further improving the heating uniformity.

The surrounding direction of the electromagnetic coils 2 can be clockwise or counterclockwise. Specifically, in the embodiment of the present disclosure, the winding directions of the electromagnetic coils 2 are all the same, so that the magnetic fields generated by the electromagnetic coils 2 have the same direction, and magnetic field cancellation due to different winding directions is avoided.

The connection between the electromagnetic coils 2 can be in parallel, in series, or combined parallel and series. In some embodiments of the present disclosure, the electromagnetic coils 2 are divided into at least two electromagnetic coil groups which are independent controlled. Thus the electromagnetic coils 2 are arranged in groups, and the power supply and power loss of each group are respectively controlled. Whether to heat or not regarding each group of electromagnetic coil groups is controlled. As such, the boiling can be realized by switching the electromagnetic coil groups of different groups to heat, improving the cooking effect.

According to the technical solution disclosed above, the electromagnetic coils 2 may include a second electromagnetic coil 2b and a third electromagnetic coil 2c simultaneously. As shown in Fig. 6, similarly, the second electromagnetic coil 2b is distributed in the space area between the first electromagnetic coils 2a. And the third electromagnetic coil 2c surrounds the first electromagnetic coils 2a. In the present embodiment, by providing the second electromagnetic coil 2b in the space area between the first electromagnetic coils 2a and by providing the third electromagnetic coil 2c at the exterior periphery of the first electromagnetic coils 2a, the magnetic field strength of the gap area and the outer surroundings between the first electromagnetic coils 2a can be enhanced. The coupling coefficient between the magnetic field generated by the electromagnetic coils 2 and the pot 102 can be increased to improve the heating power. Specifically, Fig. 7 is referred to. The black area in Fig. 7 is the corresponding heating center area when heating.

There is no limitation to the specific positioning relationship between the second electromagnetic coil 2b and the third electromagnetic coil 2c. In general, since the third electromagnetic coil 2c surrounds the first electromagnetic coil 2a, and the second electromagnetic coil 2b is disposed within the third electromagnetic coil 2c. Preferably, the second electromagnetic coil 2b and the third electromagnetic coil 2c are disposed concentrically. It is convenient to arrange the first electromagnetic coil 2a in an area between the second electromagnetic coil 2b and the third electromagnetic coil 2c in such arrangement. Furthermore, the third coil 2c may be arranged in an annular shape and concentric to the second electromagnetic coil 2b, in order to facilitate winding.

Further, in the embodiment provided in Fig. 6, the first electromagnetic coils 2a may be connected in series to form a first electromagnetic coil groups, and the second electromagnetic coil 2b and the third electromagnetic coil 2c may be connected in series to form a second electromagnetic coil group. As such, controlling can be realized in areas by switching between the first electromagnetic coil group formed by the first electromagnetic coils 2a and the second electromagnetic coil group formed by the second electromagnetic coil 2b and the third electromagnetic coil 2c.

The electromagnetic heating device 101 includes a cooking base (not shown). And it is a heating base in the case of an electromagnetic oven. A working surface is formed on the cooking base for placing and heating the pot 102, and the distance between the upper ends of the electromagnetic coils 2 and the working surface is defined as d. That is, when the electromagnetic coils 2 are distributed in a same level (for example, the coil disks are arranged in a flat shape), d is the distance between the upper end surface of any of the electromagnetic coils 2 and the working surface. When the electromagnetic coils 2 are distributed in different levels (the coil disks are arranged in a concave manner and the electromagnetic coils 2 are distributed in different surfaces), the working surface is usually also an uneven surface. As such, d is the distance between each point of the upper end surface of the electromagnetic coil 2 and the right point on the working surface in the vertical direction. In the present disclosure, multiple heating areas will be formed by the first electromagnetic coils 2a and problems are solved regarding heating over-concentration and insufficient effective heating area in the related art. Obviously, a poor magnetic field area will be formed in the exterior area of the first electromagnetic coils 2a. Correspondingly, a poor heating area will be formed. And compared to a large electromagnetic coil in the same winding range, the arrangement of the first electromagnetic coils 2a decreases the coupling coefficient between the magnetic field generated by the first electromagnetic coils 2a and the pot 102, resulting in unsatisfactory power. Therefore, in order to improve the coupling coefficient (inductance and resistance) between the magnetic field generated by the first electromagnetic coils 2a and the cooker 102, d is defined as 5mm≤d≤8mm.

Fig. 6 and 7 are referred to in a combined manner, the embodiment provided in Figs. 6 and 7 will be fully described below, specifically as follows.

The electromagnetic coils 2 are arranged on the coil disk 1. The electromagnetic coils 2 include multiple first electromagnetic coils 2a which are distributed and spaced apart on the coil disk 1 to correspondingly form multiple independent winding areas and further correspondingly form multiple magnetic field centers. The electromagnetic coils 2 further include the second electromagnetic coil 2b and the third electromagnetic coil 2c.

In the technical solution of the present disclosure, a first electromagnetic coils 2a are distributed and spaced on the coil disk 1 to correspondingly form multiple magnetic field centers. Multiple heating centers are thus formed during heating process. The problem can be solved of heating over-concentration in the related art. The first electromagnetic coils 2a are distributed and spaced to form multiple heating centers with various respective centers. The heating area is larger compared to the related art. According to the technical solution of the present disclosure, multiple heating centers are distributed in a wider area, and the effective heating area can be increased to improve an insufficient effective heating area in the related art. Furthermore, as can be seen from Fig. 7, the second electromagnetic coil 2b and/or the third electromagnetic coil 2c are arranged. The second electromagnetic coil 2b can enhance the magnetic field strength of the spaced area between the first electromagnetic coils 2a. The third electromagnetic coil 2c can enhance the magnetic field strength of at least two of the first electromagnetic coils 2a on their outer surroundings. The coupling coefficient between the magnetic field generated by the electromagnetic coils 2 and the pot can be increased to improve the heating power.

In the embodiment provided in Fig. 6, the third electromagnetic coil 2c and the second electromagnetic coil 2b are arranged concentrically. The second electromagnetic coil 2b is arranged in an annular shape, and the third electromagnetic coil 2c is arranged in a rectangular shape with arc-like transition corners. Thus, the circle where the arc segments of the second electromagnetic coil 2b are and the third electromagnetic coil 2c can be arranged concentrically to facilitate winding.

## Claims

1. An electromagnetic heating device (101) comprising:
a coil disk (1); and,
more than one electromagnetic coils (2) arranged on the coil disk (1), wherein the electromagnetic coils (2) comprise more than one first electromagnetic coils (2a) distributed and spaced apart on the coil disk (1); wherein at least four first electromagnetic coils (2a) are provided;
a second electromagnetic coil (2b) positioned on said coil disk (1) at an area of space between the first electromagnetic coils (2a); and a third electromagnetic coil (2c) surrounding the at least four first electromagnetic coils (2a); **characterized in that**
the first electromagnetic coils (2a) are arranged in rows and columns; and the second electromagnetic coil (2b) is disposed between the first electromagnetic coils (2a) of two adjacent columns and two adjacent rows.

2. The electromagnetic heating device (101) according to claim 1, wherein an outer diameter of the second electromagnetic coil (2b) is smaller than an outer diameter of one of the first electromagnetic coils (2a).

3. The electromagnetic heating device (101) according to any one of claims 1 or 2, wherein the electromagnetic coils (2) comprise the second electromagnetic coil (2b) and the third electromagnetic coil (2c), the third electromagnetic coil (2c) and the second electromagnetic coil (2b) being concentric.

4. The electromagnetic heating device (101) according to any one of claims 1 to 3, wherein the third electromagnetic coil (2c) comprises a convex portion (21c) protruding inwardly, the convex portion (21c) extending into an outer part of a space between two adjacent first electromagnetic coils (2a);
and/or, wherein the third electromagnetic coil (2c) surrounds the first electromagnetic coils (2a).

5. The electromagnetic heating device (101) according to any one of claims 1 to 4, wherein the electromagnetic coils (2) comprise a plurality of third electromagnetic coils (2c).

6. The electromagnetic heating device (101) according to any one of claims 1 to 5, wherein the third electromagnetic coils (2c) are arranged in an inner circle and in an outer circle, forming an annular area between the two adjacent third electromagnetic coils (2c), the first electromagnetic coils (2a) being arranged in the annular area, the at least four first electromagnetic coils (2a) being surrounded by the third electromagnetic coil (2c) located in an innermost circle.

7. The electromagnetic heating device (101) according to any one of claims 1 to 6, wherein the third electromagnetic coil (2c) is arranged in a square; or,
the third electromagnetic coil (2c) is arranged in a square with an arc-like transition at a corner; or,
the third electromagnetic coil (2c) is arranged in a circle.

8. The electromagnetic heating device (101) according to any one of claims 1 to 7, wherein winding directions of the electromagnetic coils (2) are the same, so as to allow the electromagnetic coils (2) to generate magnetic fields in a same direction;
and/or, wherein the electromagnetic coils (2) are connected in series.

9. The electromagnetic heating device (101) according to any one of claims 1 to 8, wherein the electromagnetic coils (2) are divided into at least two independently controlled electromagnetic coil groups.

10. The electromagnetic heating device (101) according to any one of claims 1 to 9, wherein the electromagnetic coils (2) comprise the second electromagnetic coil (2b) and the third electromagnetic coil (2c);
the first electromagnetic coils (2a) are connected in series to form a first electromagnetic coil group; the second electromagnetic coil (2b) and the third electromagnetic coil (2c) are connected in series to form a second electromagnetic coil group.

11. A cooking appliance (100) comprising the electromagnetic heating device (101) according to any one of claims 1 to 10.

12. A cooking appliance (100) according to claim 11, wherein the electromagnetic heating device (101) comprises a cooking base provided with a working surface for placing and heating a pot (102);
a distance between an upper end of the electromagnetic coils (2) and the working surface is d, wherein 5 mm ≤ d ≤ 8 mm;
and/or, wherein:
the coil disk (1) is concave; or,
the coil disk (1) is flat.

## Patentansprüche

1. Elektromagnetische Heizvorrichtung (101), umfassend:
eine Spulenscheibe (1); und,
mehr als eine elektromagnetische Spule (2), die auf der Spulenscheibe (1) angeordnet ist, wobei die elektromagnetischen Spulen (2) mehr als eine erste elektromagnetische Spule (2a) umfassen, die auf der Spulenscheibe (1) verteilt und beabstandet sind; wobei mindestens vier erste elektromagnetische Spulen (2a) vorgesehen sind;
eine zweite elektromagnetische Spule (2b), die auf der Spulenscheibe (1) in einem Bereich des Zwischenraums zwischen den ersten elektromagnetischen Spulen (2a) angeordnet ist; und eine dritte elektromagnetische Spule (2c), die die mindestens vier ersten elektromagnetischen Spulen (2a) umgibt; **dadurch gekennzeichnet, dass**
die ersten elektromagnetischen Spulen (2a) in Reihen und Spalten angeordnet sind; und die zweite elektromagnetische Spule (2b) zwischen den ersten elektromagnetischen Spulen (2a) von zwei benachbarten Spalten und zwei benachbarten Reihen angeordnet ist.

2. Elektromagnetische Heizvorrichtung (101) gemäß Anspruch 1, wobei ein Außendurchmesser der zweiten elektromagnetischen Spule (2b) kleiner ist als ein Außendurchmesser einer der ersten elektromagnetischen Spulen (2a).

3. Elektromagnetische Heizvorrichtung (101) gemäß einem der Ansprüche 1 oder 2, wobei die elektromagnetischen Spulen (2) die zweite elektromagnetische Spule (2b) und die dritte elektromagnetische Spule (2c) umfassen, wobei die dritte elektromagnetische Spule (2c) und die zweite elektromagnetische Spule (2b) konzentrisch sind.

4. Elektromagnetische Heizvorrichtung (101) gemäß einem der Ansprüche 1 bis 3, wobei die dritte elektromagnetische Spule (2c) einen konvexen Bereich (21c) umfasst, der nach innen vorsteht, wobei sich der konvexe Bereich (21c) in einen äußeren Teil eines Raums zwischen zwei benachbarten ersten elektromagnetischen Spulen (2a) erstreckt;
und/oder wobei die dritte elektromagnetische Spule (2c) die ersten elektromagnetischen Spulen (2a) umgibt.

5. Elektromagnetische Heizvorrichtung (101) gemäß einem der Ansprüche 1 bis 4, wobei die elektromagnetischen Spulen (2) eine Vielzahl von dritten elektromagnetischen Spulen (2c) umfassen.

6. Elektromagnetische Heizvorrichtung (101) gemäß einem der Ansprüche 1 bis 5, wobei die dritten elektromagnetischen Spulen (2c) in einem inneren Kreis und in einem äußeren Kreis angeordnet sind und einen ringförmigen Bereich zwischen den beiden benachbarten dritten elektromagnetischen Spulen (2c) ausbilden, wobei die ersten elektromagnetischen Spulen (2a) in dem ringförmigen Bereich angeordnet sind, wobei die mindestens vier ersten elektromagnetischen Spulen (2a) von der dritten elektromagnetischen Spule (2c) umgeben sind, die sich in einem innersten Kreis befindet.

7. Elektromagnetische Heizvorrichtung (101) gemäß einem der Ansprüche 1 bis 6, wobei die dritte elektromagnetische Spule (2c) in einem Quadrat angeordnet ist; oder
die dritte elektromagnetische Spule (2c) in einem Quadrat mit einem bogenförmigen Übergang an einer Ecke angeordnet ist; oder
die dritte elektromagnetische Spule (2c) in einem Kreis angeordnet ist.

8. Elektromagnetische Heizvorrichtung (101) gemäß einem der Ansprüche 1 bis 7, wobei die Windungsrichtungen der elektromagnetischen Spulen (2) gleich sind, so dass die elektromagnetischen Spulen (2) Magnetfelder in derselben Richtung erzeugen können;
und/oder wobei die elektromagnetischen Spulen (2) in Reihe geschaltet sind.

9. Elektromagnetische Heizvorrichtung (101) gemäß einem der Ansprüche 1 bis 8, wobei die elektromagnetischen Spulen (2) in mindestens zwei unabhängig gesteuerte elektromagnetische Spulengruppen unterteilt sind.

10. Elektromagnetische Heizvorrichtung (101) gemäß einem der Ansprüche 1 bis 9, wobei die elektromagnetischen Spulen (2) die zweite elektromagnetische Spule (2b) und die dritte elektromagnetische Spule (2c) umfassen;
die ersten elektromagnetischen Spulen (2a) in Reihe geschaltet sind, um eine erste elektromagnetische Spulengruppe auszubilden; die zweite elektromagnetische Spule (2b) und die dritte elektromagnetische Spule (2c) in Reihe geschaltet sind, um eine zweite elektromagnetische Spulengruppe auszubilden.

11. Kochgerät (100) umfassend die elektromagnetische Heizvorrichtung (101) gemäß einem der Ansprüche 1 bis 10.

12. Kochgerät (100) gemäß Anspruch 11, wobei die elektromagnetische Heizvorrichtung (101) eine Kochbasis umfasst, die mit einer Arbeitsfläche zum Aufstellen und Erhitzen eines Topfes (102) versehen ist;
ein Abstand zwischen einem oberen Ende der elektromagnetischen Spulen (2) und der Arbeitsfläche d beträgt, wobei 5 mm ≤ d ≤ 8 mm;
und/oder, wobei:
die Spulenscheibe (1) konkav ist; oder
die Spulenscheibe (1) flach ist.

## Revendications

1. Dispositif de chauffage électromagnétique (101) comprenant : un disque de bobine (1) ; et, plusieurs bobines électromagnétiques (2) disposées sur le disque de bobine (1), dans lequel les bobines électromagnétiques (2) comprennent plus d'une première bobine électromagnétique (2a) répartie et espacée sur le disque de bobine (1) ; au moins quatre premières bobines électromagnétiques (2a) sont fournies ; une deuxième bobine électromagnétique (2b) positionnée sur ledit disque de bobine (1) dans une zone d'espace entre les premières bobines électromagnétiques (2a) ; et une troisième bobine électromagnétique (2c) entourant les au moins quatre premières bobines électromagnétiques (2a) ; **caractérisé en ce que** les premières bobines électromagnétiques (2a) sont disposées en rangées et en colonnes ; et la deuxième bobine électromagnétique (2b) est disposée entre les premières bobines électromagnétiques (2a) de deux colonnes adjacentes et de deux rangées adjacentes.

2. Le dispositif de chauffage électromagnétique (101) selon la revendication 1, dans lequel un diamètre extérieur de la deuxième bobine électromagnétique (2b) est inférieur à un diamètre extérieur de l'une des premières bobines électromagnétiques (2a).

3. Le dispositif de chauffage électromagnétique (101) selon l'une des revendications 1 ou 2, dans lequel les bobines électromagnétiques (2) comprennent la deuxième bobine électromagnétique (2b) et la troisième bobine électromagnétique (2c), la troisième bobine électromagnétique (2c) et la deuxième bobine électromagnétique (2b) étant concentriques.

4. Le dispositif de chauffage électromagnétique (101) selon l'une des revendications 1 à 3, dans lequel la troisième bobine électromagnétique (2c) comprend une partie convexe (21c) faisant saillie vers l'intérieur, la partie convexe (21c) s'étendant dans une partie extérieure d'un espace entre deux premières bobines électromagnétiques adjacentes (2a) ; et/ou dans lequel la troisième bobine électromagnétique (2c) entoure les premières bobines électromagnétiques (2a).

5. Le dispositif de chauffage électromagnétique (101) selon l'une des revendications 1 à 4, dans lequel les bobines électromagnétiques (2) comprennent une pluralité de troisièmes bobines électromagnétiques (2c).

6. Le dispositif de chauffage électromagnétique (101) selon l'une des revendications 1 à 5, dans lequel les troisièmes bobines électromagnétiques (2c) sont disposées dans un cercle intérieur et dans un cercle extérieur, formant une zone annulaire entre les deux troisièmes bobines électromagnétiques (2c) adjacentes, les premières bobines électromagnétiques (2a) étant disposées dans la zone annulaire, les au moins quatre premières bobines électromagnétiques (2a) étant entourées par la troisième bobine électromagnétique (2c) située dans le cercle le plus intérieur.

7. Le dispositif de chauffage électromagnétique (101) selon l'une des revendications 1 à 6, dans lequel la troisième bobine électromagnétique (2c) est disposée en carré ; ou, la troisième bobine électromagnétique (2c) est disposée dans un carré avec une transition en forme d'arc dans un coin ; ou, la troisième bobine électromagnétique (2c) est disposée en cercle.

8. Le dispositif de chauffage électromagnétique (101) selon l'une des revendications 1 à 7, dans lequel les directions d'enroulement des bobines électromagnétiques (2) sont les mêmes, de manière à permettre aux bobines électromagnétiques (2) de générer des champs magnétiques dans une même direction ; et/ou, dans lequel les bobines électromagnétiques (2) sont connectées en série.

9. Le dispositif de chauffage électromagnétique (101) selon l'une des revendications 1 à 8, dans lequel les bobines électromagnétiques (2) sont divisées en au moins deux groupes de bobines électromagnétiques contrôlés indépendamment.

10. Le dispositif de chauffage électromagnétique (101) selon l'une des revendications 1 à 9, dans lequel les bobines électromagnétiques (2) comprennent la deuxième bobine électromagnétique (2b) et la troisième bobine électromagnétique (2c) ; les premières bobines électromagnétiques (2a) sont connectées en série pour former un premier groupe de bobines électromagnétiques ; la deuxième bobine électromagnétique (2b) et la troisième bobine électromagnétique (2c) sont connectées en série pour former un deuxième groupe de bobines électromagnétiques.

11. Appareil de cuisson (100) comprenant le dispositif de chauffage électromagnétique (101) selon l'une quelconque des revendications 1 à 10.

12. Appareil de cuisson (100) selon la revendication 11, dans lequel le dispositif de chauffage électromagnétique (101) comprend une base de cuisson dotée d'une surface de travail pour placer et chauffer une casserole (102) ; une distance entre l'extrémité supérieure des bobines électromagnétiques (2) et la surface de travail est d, dans laquelle 5 mm ≤ d ≤ 8 mm ; et/ou, dans lequel : le disque de bobine (1) est concave ; ou, le disque de bobine (1) est plat.
